(19) **Europäisches Patentamt / European Patent Office / Office européen des brevets**

(11) **EP 4 546 585 A1**

(12) **EUROPEAN PATENT APPLICATION**
published in accordance with Art. 153(4) EPC

(43) Date of publication:
**30.04.2025  Bulletin 2025/18**

(21) Application number: **23827508.5**

(22) Date of filing: **21.06.2023**

(51) International Patent Classification (IPC):
*H02G 15/184* (2006.01)  *H01R 4/20* (2006.01)
*H01B 3/28* (2006.01)  *C08L 83/04* (2006.01)
*C08L 23/16* (2006.01)  *C08K 3/04* (2006.01)
*C08K 3/14* (2006.01)  *C08K 3/22* (2006.01)

(52) Cooperative Patent Classification (CPC):
**C08K 3/04; C08K 3/14; C08K 3/22; C08L 23/16;**
**C08L 83/04; H01B 3/28; H01B 3/30; H01B 7/14;**
**H01B 9/00; H01R 4/20; H02G 15/184**

(86) International application number:
**PCT/KR2023/008589**

(87) International publication number:
**WO 2023/249398 (28.12.2023 Gazette 2023/52)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **21.06.2022  KR 20220075475**
**20.06.2023  KR 20230079092**

(71) Applicant: **LS Cable & System Ltd.**
**Anyang-si, Gyeonggi-do 14119 (KR)**

(72) Inventors:
• YUN, Ho Jung
  **Paju-si Gyeonggi-do 10888 (KR)**
• LEE, In Hwoi
  **Anyang-si Gyeonggi-do 13943 (KR)**
• LEE, Tae Ho
  **Gumi-si Gyeongsangbuk-do 39183 (KR)**

(74) Representative: **K&L Gates LLP**
**Karolinen Karree**
**Karlstraße 12**
**80333 München (DE)**

(54) **DIRECT CURRENT CABLE SYSTEM**

(57)  The present invention relates to a direct-current power cable system capable of alleviating an electric field in a portion where space charges excessively accumulate inside a sleeve member of an ultra-high voltage direct-current power cable system, thereby preventing or minimizing electric field distortion and insulation breakdown of a cable joint box due to local electric field concentration.

[FIG. 6]

## Description

## [Technical Field]

The present invention relates to a direct-current power cable system. More specifically, the present invention relates to a direct-current power cable system capable of alleviating an electric field in a portion where space charges excessively accumulate inside a sleeve member of an ultra-high voltage direct-current power cable system, thereby preventing or minimizing electric field distortion and insulation breakdown of a cable joint box due to local electric field concentration.

## [Background Art]

In general, in large-scale power systems where large capacity and long-distance transmission are required, high-voltage transmission to increase transmission voltage is essential from the perspectives of reducing power loss, addressing construction site issues, and increasing transmission capacity.

Transmission methods may be broadly divided into alternating-current transmission and direct-current transmission, among which direct-current transmission refers to the transmission of power using a direct-current method. Specifically, the direct-current transmission first converts alternating-current power on a transmission side to an appropriate voltage, then transforms it into direct current through a forward conversion device, and transmits it to the receiving side via a transmission line. On the receiving side, a reverse conversion device then converts the direct-current power back into alternating-current power.

In particular, the direct-current transmission offers advantages in transporting large-capacity power over long distances and enables interconnection of asynchronous power systems. Additionally, in long-distance transmission, direct current offers advantages in having lower power loss and higher stability compared to alternating current.

The ultra-high voltage direct-current power cables used in the direct-current power transmission, known as the high voltage direct-current cable (HVDC cable), are installed and interconnected by units of several tens to hundreds of meters through a cable joint box.

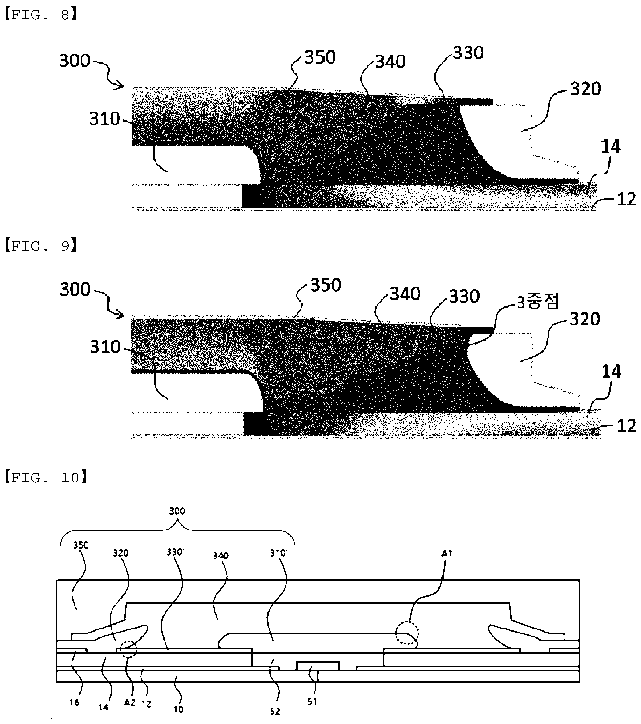

FIG. 10 illustrates an example of a direct-current power cable system according to conventional technology.

As illustrated in FIG. 10, a general direct-current power cable system may be configured to include a first electrode 310' disposed on a conductor connection portion of a pair of direct-current power cables, a pair of second electrodes 320' disposed facing each other, an electric field alleviation layer 330' connected to the first electrode 310' and the pair of second electrodes 320' and configured with a dedicated rubber insulating material, a rubber insulating layer 340' provided to surround the electric field alleviation layer 330', and a sleeve member 300' provided with a sleeve shielding layer 350' disposed on an outer side of the rubber insulating layer.

The electric field alleviation layer 330' is configured from a thermosetting rubber resin containing a filler material that induces nonlinear electrical behavior according to a specific electric field. Under normal operating conditions, the electric field alleviation layer 330' operates as an insulating layer with sufficiently high resistance; however, when space charges accumulate and an excessive electric field form, the resistance of the electric field alleviation layer 330' nonlinearly decreases, allowing charges to dissipate along the electric field alleviation layer 330' toward the second electrode 320' and an outer semiconductive layer 16. This process relieves the accumulation of space charges, thereby preventing insulation breakdown caused by electric field concentration.

However, in the sleeve member 300' of the conventional direct-current power cable system illustrated in FIG. 10, excessive accumulation of space charges tends to occur particularly at an edge end region A1 of the first electrode 310' or at a region A2 where the second electrode 320' and the electric field alleviation layer 330' make contact. The space charges distort the electric field within the insulating layer 14' of the power cable or the rubber insulating layer 340' of the sleeve member 300', causing electric field concentration, which may lead to insulation breakdown.

If the electric field alleviation layer is absent in the power cable system illustrated in FIG. 10, electric field concentration intensifies at the heterogeneous interface between an insulating layer 16' of the power cable and the rubber insulating layer 340'. Additionally, a triple point is formed at a region where the insulating layer 16' of the power cable, the rubber insulating layer 340' of the sleeve member, and the second electrode 320' meet, thereby increasing the possibility of insulation breakdown.

Further, as illustrated in FIG. 10, when the electric field alleviation layer 330' is provided, a heterogeneous interface is not formed between the insulating layer 16' of the power cable and the rubber insulating layer 340' of the sleeve member. However, a heterogeneous interface still exists between the insulating layer 16' of the power cable and the electric field alleviation layer 330' of the sleeve member or between the electric field alleviation layer 330' and the rubber insulating layer 340' of the sleeve member 300. Additionally, a triple point is formed at the region where the electric field alleviation layer 330', the rubber insulating layer 340', and the second electrode 320' of the sleeve member 300 meet, existing a potential for insulation breakdown.

In addition, while the electric field alleviation layer 330' performs the function of alleviating electric field concentration within the sleeve member 300', the manufacturing process of the electric field alleviation layer 330' is relatively complex, and the filler contained in the electric field alleviation layer 330' is costly. Consequently, when the size of the electric field alleviation layer 330' within the sleeve member 300' is expanded, the manufacturing process becomes more challenging, and the cost of the cable joint box increases.

Therefore, a direct-current power cable system is required that may alleviate electric field concentration in portions of the sleeve member of an ultra-high voltage direct-current power cable where space charges excessively accumulate, thereby preventing or minimizing electric field distortion and reduction in direct-current dielectric strength due to space charge accumulation and reducing the manufacturing costs.

**[Disclosure]**

**[Technical Problem]**

The present invention is directed to providing a direct-current power cable system that alleviates electric field concentration in portions of the sleeve member of an ultra-high voltage direct-current power cable system where space charges excessively accumulate, thereby preventing or minimizing electric field distortion and reduction in direct-current dielectric strength due to space charge accumulation.

**[Technical Solution]**

To solve the aforementioned objects, the present invention is directed to providing a direct-current power cable system, comprising: a pair of direct-current power cables, each including a conductor, an inner semiconductive layer surrounding the conductor, an insulating layer surrounding the inner semiconductive layer, and an outer semiconductive layer surrounding the insulating layer, wherein cable connection regions in which the conductor, the insulating layer, and the outer semiconductive layer are sequentially exposed are disposed to face each other; a cable joint box connecting the pair of direct-current power cables, the cable joint box including: a conductor connection portion configured to connect the conductors of the pair of direct-current power cables; a sleeve member mounted to surround the conductor connection portion and the cable connection regions; and a housing accommodating the sleeve member, wherein the sleeve member comprises: a first electrode disposed to surround the conductor connection portion and electrically connected to the conductor connection portion; a pair of second electrodes each provided on both sides of the first electrode along a cable length direction; an electric field alleviation layer surrounding the first electrode and the insulating layer, in contact with an inner surface of the second electrode, and at least partially disposed between the second electrode and the outer semiconductive layer to ensure the second electrode and the outer semiconductive layer to be in a non-contact state, being in contact with the outer semiconductive layer; a rubber insulating layer surrounding the electric field alleviation layer and the second electrode; and a sleeve shielding layer surrounding the rubber insulating layer, and wherein a triple point is provided on the inner surface of the second electrode where the second electrode, the electric field alleviation layer, and the rubber insulating layer all meet, and a shortest distance L from the insulating layer to the triple point is greater than a height h of the first electrode.

In addition, a shortest distance H from the insulating layer to top of the second electrode and the shortest distance L from the insulating layer to the triple point may satisfy a following equation.

$$[Equation] \quad 1/2 \times H \leq L \leq H$$

Further, the sleeve shielding layer may be provided to be separated from the second electrode, and a distance between both ends of the sleeve shielding layer may be formed shorter than a distance between both ends of the rubber insulating layer so that a path for a creepage distance from the sleeve shielding layer to the second electrode is formed in a stepped shape.

Here, the electric field alleviation layer may be configured from a material with higher electrical conductivity than the rubber insulating layer.

Meanwhile, the conductor connection portion may include a conductor sleeve configured to connect the conductors of the pair of direct-current power cables, and a corona shield mounted on an outer side of the conductor sleeve and electrically connected to the conductor sleeve.

Further, the electric field alleviation layer may be provided to surround an entire region of an outer circumferential surface of the first electrode disposed in the center portion and provided with an outer diameter variation section where an outer diameter of the electric field alleviation layer changes between the first electrode and the second electrode.

Specifically, the electric field alleviation layer may include: a first electrode covering portion surrounding the first electrode; a pair of connection portions extending in a direction from both sides of the first electrode covering portion toward the second electrode, with a reduced outer diameter compared to the first electrode covering portion; a pair of inclined portions connected to the connection portions, with an increasing outer diameter in a direction of the second electrode to have an inclined section; and a pair of second electrode covering portions connected to the inclined portions, in contact with an inner surface region of the second electrode, and at least partially disposed between the outer semiconductive layer and the second electrode, being in contact with the outer semiconductive layer.

Here, a slope of the inclined portion of the electric field alleviation layer may be in the range of 5 degrees to 45 degrees.

Further, electrical conductivity of the rubber insulating layer may be $10^{-12}$ to $10^{-15}$ S/m (Siemens per meter), and electrical conductivity of the electric field alleviation layer may be 5 to 10000 times greater than electrical conductivity of the rubber insulating layer.

Meanwhile, the electric field alleviation layer may be configured from an insulating composition including a thermosetting rubber and a filler that induces nonlinear electrical behavior.

Here, the thermosetting rubber may be liquid silicone rubber (LSR) or ethylene propylene rubber (EPDM).

In addition, the filler may include silicon carbide.

Meanwhile, the housing may have a waterproofing material filled therein.

Further, the cable joint box may be a normal joint that electrically connects both ends of the sleeve shielding layer to the pair of second electrodes on both sides using electrical connection means.

In addition, the cable joint box may be an insulation joint that electrically connects one end of the sleeve shielding layer to only one of the second electrodes using electrical connection means, while the other end of the sleeve shielding layer and a remaining second electrode are in an insulated state.

Further, the housing may be made of a metal material.

**[Advantageous Effects]**

According to the direct-current power cable system of the present invention, the electric field alleviation layer, which configures the sleeve member, is provided between the second electrode and the outer semiconductive layer of the power cable. As a result, the contact area between the electric field alleviation layer and the second electrode increases, and the contact area between the electric field alleviation layer and the outer semiconductive layer also increases due to their direct contact. This expands the microcurrent path to the outer semiconductive layer of the power cable, allowing space charges to discharge easily to the outer semiconductive layer without accumulating.

In addition, according to the direct-current power cable system of the present invention, the structure in which the electric field alleviation layer of the sleeve member is in contact with the inner surface of the second electrode is applied, preventing the formation of a region where the insulating layer of the power cable, the second electrode and the electric field alleviation layer of the sleeve member all meet at a single point. This effectively prevents an excessive accumulation phenomenon of space charges inside the sleeve member.

Similarly, according to the direct-current power cable system of the present invention, the electric field alleviation layer of the sleeve member is configured to form an inclined portion with an increasing outer diameter to contact the inner surface of the second electrode to have an inclined section, thereby ensuring that the triple point region, where the second electrode, the rubber insulating layer, and the electric field alleviation layer of the sleeve member all meet at a single point, is spaced apart from the conductor of the power cable. This has the effect of alleviating electric field concentration.

In addition, according to the direct-current power cable system of the present invention, the electric field alleviation layer that configures the sleeve member is configured to contact the entire region of the first electrode and the inner surface regions of the pair of second electrodes. This forms a microcurrent path in the electric field alleviation layer, allowing the charge to move from the first electrode toward the pair of second electrodes, thereby alleviating the electric field in the edge end region of the first electrode.

In addition, according to the direct-current power cable system of the present invention, configuring the thickness or outer diameter of each section of the electric field alleviation layer in the lengthwise direction of the sleeve member differently has an effect of preventing the phenomenon of dielectric strength reduction caused by the electric field alleviation layer becoming excessively large, while also minimizing costs.

Further, according to the direct-current power cable system of the present invention, the pair of second electrodes configuring the sleeve member are configured to be separated from the sleeve shielding layer to prevent contact. The path of the creepage distance from the sleeve shielding layer to the second electrode is formed in a stepped shape, with the distance between both ends of the sleeve shielding layer made shorter than the distance between both ends of the rubber insulating layer. This configuration secures the creepage distance between the sleeve shielding layer and the second electrode, thereby enabling diagnostic tasks, such as partial discharge diagnosis or fault diagnosis, of the direct-current power cable system.

**[Description of Drawings]**

FIG. 1 illustrates an embodiment of a power cable applied to a direct-current power cable system according to the present invention.
FIG. 2 illustrates an embodiment of a submarine cable applied to the direct-current power cable system according to the present invention.
FIG. 3 illustrates a cross-sectional view of a cable joint box including the direct-current power cable system according to the present invention.
FIG. 4 illustrates a cross-sectional view of the direct-current power cable system when a cable joint box according to the present invention is used as a normal joint, and FIG. 5 illustrates a cross-sectional view of the direct-current power cable system when a cable joint box according to the present invention is used as an insulation joint.
FIG. 6 illustrates an enlarged cross-sectional view of a sleeve member in the direct-current power cable system according to the present invention.

FIG. 7 illustrates the movement direction of internal space charges due to microcurrents in the direct-current power cable system according to the present invention.

FIGS. 8 and 9 are graphs illustrating the electric field distribution in the direct-current power cable system according to the present invention.

FIG. 10 illustrates an example of a direct-current power cable system according to conventional technology.

**[Mode for Disclosure]**

Hereinafter, exemplary embodiments of the present invention will be described in detail with reference to the accompanying drawings. However, the present invention is not limited to the exemplary embodiments to be described below and may be specified as other aspects. On the contrary, the embodiments introduced herein are provided to make the disclosed content thorough and complete, and sufficiently transfer the spirit of the present invention to those skilled in the art. Like reference numerals indicate like constituent elements throughout the specification.

In this specification, the term "surround" refers to surrounding in a radial direction, not in a lengthwise direction of a cable or sleeve member. That is, when A is said to surround B, it refers to that A surrounds B in the radial direction of the cable or sleeve member.

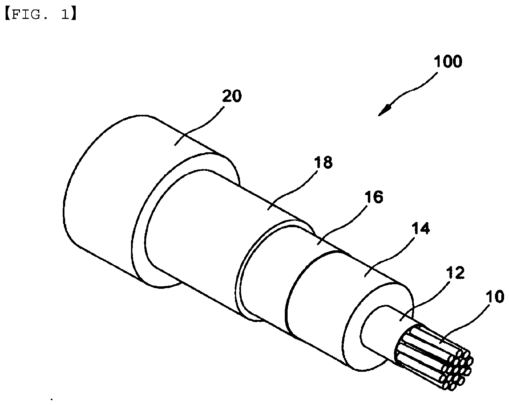

FIG. 1 illustrates an embodiment of an underground power cable applied to a direct-current power cable system according to the present invention.

As illustrated in FIG. 1, a power cable 100 is provided with a conductor 10 at a center thereof. The conductor 10 serves as a passage for current flow and may, for example, be configured from materials such as copper or aluminum. The conductor 10 illustrated in FIG. 1 is illustrated as being configured by stranding multiple wires 11, but is not limited thereto, the conductor may also be configured in various forms, such as a flat conductor.

Further, the conductor 10 configured by stranding wires or similar elements may have an uneven surface, leading to an uneven electric field and making partial corona discharge more likely. In addition, the insulation performance may be degraded when voids are formed between the surface of the conductor 10 and an insulation layer 14 described below. To solve problems as described above, an inner semiconductive layer 12 configured from a semiconductive material may be provided on an outer side of the conductor 10.

The insulating layer 14 is provided on an outer side of the inner semiconductive layer 12. The insulating layer 14 electrically insulates the conductor 10 from the outside. In general, the insulating layer 14 needs to have a high breakdown voltage and maintain stable insulation performance over an extended period. Further, the insulating layer 14 exhibit low dielectric loss and possess thermal resistance performance, such as heat resistance. Accordingly, the insulating layer 14 uses polyolefin resins such as polyethylene and polypropylene, with polyethylene resin being preferred. The polyethylene resin may be a crosslinked resin and may be manufactured using a crosslinking agent such as silane or an organic peroxide, for example, dicumyl peroxide (DCP), etc.

However, when a direct-current high voltage is applied to the power cable, charges may be injected from the conductor 10 into the inner semiconductive layer 12, insulating layer 14, and the like, potentially leading to the formation of space charges within the insulating layer 14. The formed space charges accumulate within the insulating layer 13 over the usage time of the cable. When impulse voltage is applied to the cable or the polarity of the direct-current voltage applied to the cable reverses abruptly, these accumulated space charges may sharply increase the electric field strength near the conductor 10, causing a problem of reducing the insulation breakdown voltage of the power cable.

Accordingly, the insulating layer 14 may include inorganic particles in addition to the crosslinked resin. The inorganic particles may include nano-sized aluminosilicate, calcium silicate, calcium carbonate, magnesium oxide, and similar materials. However, from the perspective of impulse strength of the insulating layer, magnesium oxide is the preferred inorganic particle. The magnesium oxide may be obtained from natural magnesium ores, but it may also be produced from artificial synthetic sources using magnesium salts in seawater, with the additional advantage of being supplied as a high-purity material with stable quality and properties.

The magnesium oxide basically has the crystal structure of a face-centered cubic structure, but may have various shapes, purities, degrees of crystallinity, and physical properties depending on the synthesis method. Specifically, the magnesium oxide is classified into cubic, terrace, rod, porous, and spherical types and may be used in various applications according to each unique physical property. The inorganic particles, including such magnesium oxide, exert an effect of suppressing the movement of charges and the accumulation of space charges by forming a potential well at the interface between the base resin and the inorganic particles when an electric field is applied to the cable.

However, the inorganic particles added to the insulating layer 14 may act as impurities when added in large amounts, and even in small amounts, the inorganic particles present the problem of reducing impulse strength, which is another critical property required in power cables. Therefore, it is preferable to add the inorganic particles in an amount of 0.2 to 5 parts by weight, as inorganic particles alone cannot sufficiently reduce accumulated space charges.

Meanwhile, if the exterior as well as the interior of the insulating layer 14 is not shielded, some portion of the electric field is absorbed by the insulating layer 14, but a large portion of the electric field discharges externally. In this case, when the electric field becomes a predetermined value or higher, the insulating layer 14 and the cable jacket of the power cable 100 may be damaged. Accordingly, the outer semiconductive layer 16 is provided on an outer side of the insulating layer 14. As a result, the outer semiconductive layer 16 serves to create an equipotential distribution of electric field lines between the inner semiconductive layer 12, thereby enhancing the dielectric strength of the insulating layer 14. In addition, the outer semiconductive layer 16 smooths the surface of the insulating layer 14 in the cable, alleviating electric field concentration and thereby preventing corona discharge.

On the outer side of the outer semiconductive layer 16, a shielding layer 18, consisting of either a metal sheath or a neutral wire depending on the type of cable, is provided. The shielding layer 18 is provided for electrical shielding and as a return path for short-circuit currents.

A cable jacket 20 is provided on an outermost portion of the power cable 100. The cable jacket 20 is provided on an outer circumference of the cable 100 and serves to protect the internal configuration of the cable 100. Accordingly, the cable jacket 20 is endowed with excellent weather resistance to endure various climatic and natural environmental factors, such as light, wind, rain, moisture, and atmospheric gases, as well as chemical resistance to withstand exposure to chemicals, along with high mechanical strength. Generally, the cable jacket is manufactured with materials such as polyvinyl chloride (PVC) or polyethylene (PE).

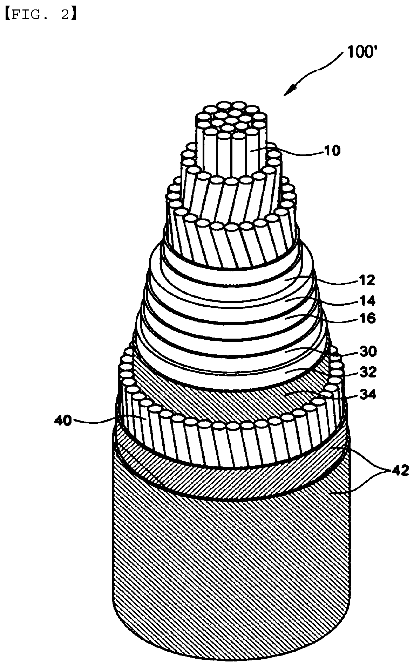

FIG. 2 illustrates an embodiment of a submarine cable 100' applied to the direct-current power cable system according to the present invention. The differences will be described in comparison to the previously described embodiment in FIG. 1.

With reference to FIG. 2, the conductor 10, the inner semiconductive layer 12, the insulating layer 14, and the outer semiconductive layer 16 are similar to the embodiment described in FIG. 1, and therefore, repetitive descriptions are omitted.

On the exterior of the outer semiconductive layer 16, a metal sheath 30 made of lead, commonly known as a "lead sheath," is provided to prevent the intrusion of foreign substances, such as external water, which may otherwise degrade the performance of the insulating layer 14.

Further, on the exterior of the metal sheath 30, a sheath 32 configured from a resin such as polyethylene is provided with a bedding layer 34 to prevent direct contact with water. Sheathing wires 40 may be provided on the bedding layer 34. The sheathing wires 40 are provided on the outer circumference of the cable 100' to serve to enhance mechanical strength in order to protect the cable from the external environment of the seabed.

On the outer circumference of the sheathing wires 40, that is, on the outer circumference of the cable 100', a serving layer 42 is provided as the outer covering of the cable. The serving layer 42 is provided on an outer circumference of the cable 100' and serves to protect the internal configuration of the cable 100'. Particularly for submarine cables, the serving layer 42 possesses excellent weather resistance and mechanical strength to withstand submarine environments, such as exposure to seawater. For example, the serving layer 42 may be configured from materials such as polypropylene yarn.

Each direct-current power cable described with reference to FIGS. 1 and 2 has a matching core structure, aside from the cable protective layer structure according to the installation environment. Accordingly, hereinafter, a description will be provided for a direct-current power cable system connected via a cable joint box.

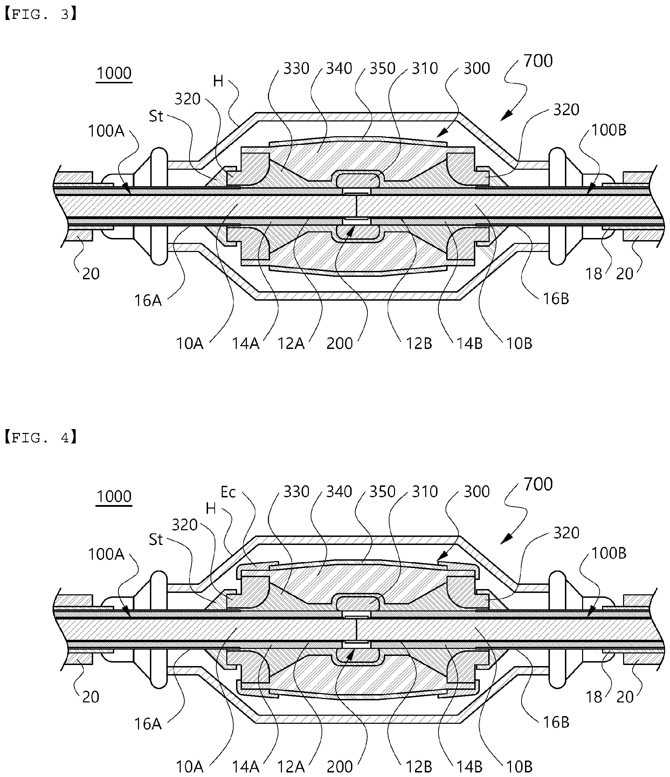

FIG. 3 illustrates a cross-sectional view of the direct-current power cable system according to the present invention. For convenience of description, a description will be provided for a direct-current power cable system configured with the direct-current power cable for underground installation being connected, illustrated in FIG. 1.

A direct-current power cable system 1000 according to the present invention may be configured to include a pair of direct-current power cables 100A and 100B and a cable joint box 700 that connects the pair of direct-current power cables 100A and 100B.

Further, as illustrated in FIG. 3, the cable joint box 700 may be configured to include a conductor connection portion 200 that connects the conductors of the pair of direct-current power cables; a sleeve member 300 mounted to surround the conductor connection portion 200 and cable connection regions; and a housing H that accommodates the sleeve member 300 therein. The housing may be configured with a metal casing of a metal material. In this case, a space between the housing H of the cable joint box and the sleeve member 300 according to the present invention may be filled with a waterproofing material (not illustrated) or similar substance.

The conductor connection portion 200 inside the cable joint box 700 connects the conductors 10A and 10B of the pair of direct-current power cables 100A and 100B by welding the ends of the conductors, or by applying a conductor sleeve 251, which may be pressed or connected to the conductor using fastening bolts. A corona shield 250 may be mounted on a conductor-connected portion, and the corona shield 250 is mounted to be horizontally level with the insulators of the pair of direct-current power cables 100A and 100B, and is electrically connected to the conductor sleeve 251 or the connected conductors 10A and 10B using braided wires or similar means.

The corona shield 250 may be mounted using a fixing structure (not illustrated), such as a groove mounted on the insulator, to ensure that no level difference occurs with the insulating layers 14A and 14B of the pair of direct-current power cables 100A and 100B.

Further, the sleeve member 300 may be mounted to surround the insulating layers 14A and 14B of the pair of direct-current power cables 100A and 100B and the corona shield 250.

That is, the sleeve member 300 may be configured to include: a first electrode 310 disposed to surround the conductor connection portion and electrically connected to the conductor connection portion 200; a pair of second electrodes 320 provided each on both sides of the first electrode 310 along a cable length direction; an electric field alleviation layer 330 surrounding the first electrode 310 and the insulating layer 16, being in contact with inner surfaces of the pair of second electrodes 320, and at least partially disposed between the second electrode 320 and the outer semiconductive layer 16 to ensure a non-contact state between the second electrode and the outer semiconductive layer, being in contact with the outer semiconductive layer 16; a rubber insulating layer 340 surrounding the electric field alleviation layer 330 and the second electrode 320; and a sleeve shielding layer 350 surrounding the rubber insulating layer 340.

The first electrode 310 and the pair of second electrodes 320 may be manufactured using a semiconductive material, such as semiconductive liquid silicone rubber (LSR) or semiconductive ethylene propylene rubber (EPDM). The first electrode 310 and the pair of second electrodes 320 serves to ensure that the electric field is evenly distributed without local concentration between the first electrode 310 and the pair of second electrodes 320.

Specifically, the first electrode 310 is electrically connected to the conductors 10A and 10B of the pair of direct-current power cables, serving as a so-called high-voltage electrode (high voltage semi-conductor). The pair of second electrodes 320 are each electrically connected to the outer semiconductive layers of the pair of direct-current power cables 100A and 100B through a semiconductive taping layer (St), described below, or similar, performing the role of a so-called deflector electrode (deflector semi-conductor). Accordingly, within the sleeve member, the electric field distribution is arranged along the area between the first electrode 310 and the second electrode 320.

As illustrated in FIG. 3, The shape of the first electrode 310 may be formed of a curved surface with a rounded end of edges, and the shape of the second electrode 320 may have an inner surface formed of rounded curved surface that is in contact with the electric field alleviation layer 330 of the sleeve member. Additionally, the shape, size, and material of the first electrode 310 and second electrode 320 may be appropriately adjusted to be designed to ensure that the electric field distribution between the first electrode 310 and the second electrode 320 does not become concentrated.

The direct-current power cable system according to the present invention may be configured such that the pair of second electrodes 320 are separated from the sleeve shielding layer 350, which is disposed at an outermost portion of the sleeve member 300, to prevent contact with the sleeve shielding layer 350, and may be provided on both sides of the sleeve member 300.

Here, the sleeve shielding layer 350 is configured from a semiconductive material, similar to the first electrode 310 or the second electrode 320. As described above, the sleeve shielding layer 350 in the sleeve member 300 is provided spaced apart from the second electrode 320, which serves as a shielding electrode. However, optionally, the sleeve shielding layer 350 and the second electrode 320 may be formed to be electrically connected using electrical connection means, in which a semiconductive taping layer, a metal mesh, or similar means may be used as the electrical connection means.

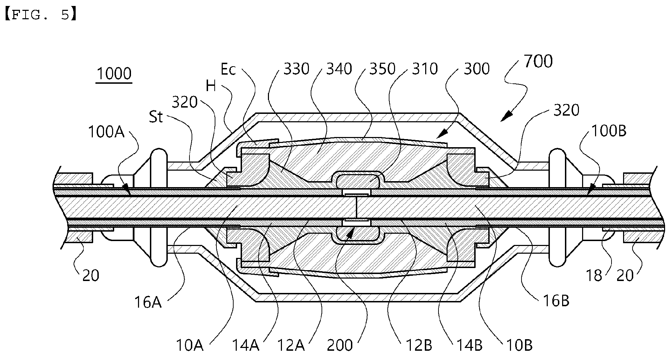

FIG. 4 illustrates a cross-sectional view of the direct-current power cable system when a cable joint box according to the present invention is used as a normal joint, and FIG. 5 illustrates a cross-sectional view of the direct-current power cable system when a cable joint box according to the present invention is used as an insulation joint.

As illustrated in FIG. 4, when the cable joint box according to the present invention is used as a normal joint, the cable joint box may be used so that both ends of the sleeve shielding layer 350 is electrically connected to the pair of second electrodes 320 on both sides using electrical connection means (Ec). Meanwhile, as illustrated in FIG. 5, when the cable joint box is used as an insulation joint, the cable joint box may be used so that only one end of the sleeve shielding layer 350 is electrically connected to one of the second electrodes 320 using the electrical connection means (Ec), while the other end of the sleeve shielding layer 350 and the remaining second electrode 320 are kept in an insulated state.

In addition, as illustrated in FIG. 5, when the cable joint box is used as an insulation joint, an insulating barrel (not illustrated) may be provided in the middle of the housing H of a metal material, thereby an electrically insulated section being provided within the housing.

Meanwhile, in order to space the sleeve shielding layer 350 apart from the second electrode 320 in the sleeve member 300, a distance between both ends of the sleeve shielding layer 350 may be formed shorter than a distance between both ends of the rubber insulating layer 340, so that a path of a creepage distance from the sleeve shielding layer 350 to the second electrode 320 is formed in a stepped shape. The detailed description thereof will be described below.

Further, in a direct-current power cable system configured with multiple cable joint boxes being connected, the cable joint box configuring the direct-current power cable system illustrated in FIGS. 3 to 5, diagnostic techniques such as partial discharge diagnosis or fault diagnosis are widely utilized.

When utilizing such diagnostic techniques, the area between the sleeve shielding layer 350 and the second electrode 320 in the sleeve member 300 in the insulation joint needs to be insulated and have sufficient creepage distance to allow for sectional diagnosis of the cable system.

Additionally, for fault diagnosis, the diagnostic device applies a test voltage to the shielding layer of the power cable system to diagnose fault signals. Measurement is only possible when the second electrode 320 and the sleeve shielding layer 350 in the sleeve member 300 within the insulation joint are separated, and a creepage distance exists. If the creepage distance between the sleeve shielding layer 350 and the second electrode 320 in the sleeve member 300 is not secured, sufficient voltage is not applied even when a test voltage is applied, making diagnosis impossible.

Therefore, the present invention enables smooth diagnostic operations for the power cable system by configuring the second electrode 320 and the sleeve shielding layer 350 that configure the sleeve member to be separated, allowing sectional diagnosis of the cable system.

The rubber insulating layer 340 is manufactured from, for example, liquid silicone rubber (LSR) or ethylene propylene rubber (EPDM), thereby ensuring the insulating function of the sleeve member 300.

The electric field alleviation layer 330 is provided such that an entire outer circumferential surface thereof is surrounded by the rubber insulating layer 340, being isolated from the external environment. The electric field alleviation layer 330 is provided inside the rubber insulating layer 340 to entirely surround the first electrode 310 and to be in contact with an inner surface region of the pair of second electrodes 320. That is, the electric field alleviation layer 330 is not provided to completely surround the pair of second electrodes 320, but rather is provided to be in contact with only a portion of the inner surface of the pair of second electrodes 320. The reason for configuring the electric field alleviation layer 330 in this manner will be described below.

The electric field alleviation layer 330 primarily performs an insulating function, but because the electric field alleviation layer 330 is configured with an insulating composition of higher electrical conductivity than the rubber insulating layer 340, when an excessive electric field is applied and microcurrents flow through the electric field alleviation layer 330, charges move in the direction of the electric field alleviation layer 330. This allows the charges to be discharged outside the sleeve member 300 through the second electrode 320 and the outer semiconductive layer 16 of the cable.

Examining the structure of a cable joint box without a conventional electric field alleviation layer, when a predetermined direct-current (DC) voltage is applied to the cables 100A and 100B for a predetermined period of time or more, space charges may accumulate locally inside the cable joint box, for example, at the interface between the insulating layers 14A and 14B of the cables 100A and 100B and the rubber insulating layer 340, which have different materials, i.e., at the heterogeneous interface. Since this accumulation of space charges may act as a weakness in terms of insulation performance, it is necessary to discharge the accumulated space charges as described above. Accordingly, the sleeve member 300 according to the present invention is provided with the aforementioned electric field alleviation layer 330 to enable the discharge of space charges as described above. The electric field alleviation layer 330 allows microcurrents to flow selectively according to a specific electric field value, between the conductors 10A and 10B and the outer semiconductive layers 16A and 16B of the ultra-high voltage direct-current power cable. When the space charges accumulate at a certain level or higher, this electric field alleviation layer 330 discharges the charges.

The electric field alleviation layer 330 may have a volume resistivity that changes non-linearly under an electric field in the range of $10^{10}$ to $2 \times 10^{17}$ Ω·cm. For the electric field alleviation layer 330 with a volume resistivity within the range above, the rubber insulating layer 340 may have a higher volume resistivity of $10^{14}$ to $10^{18}$ Ω·cm.

In the electric field alleviation layer 330, the meaning of the electric field alleviation layer 330 allowing microcurrents to selectively flow between the conductor 10 and the outer semiconductive layer 16 is as follows. The electric field alleviation layer 330, with the aforementioned physical properties, normally has a relatively high resistance and thus does not electrically connect the conductor 10 and the outer semiconductive layer 16.

In contrast, when space charges accumulate within the sleeve member 300, particularly when space charges accumulate at a predetermined level or higher at heterogeneous interfaces, such as the interface between the cable insulating layer 14 and the electric field alleviation layer 330, the interface between the electric field alleviation layer 330 and the rubber insulating layer 340, or at the edge portion of the first electrode 310, the electric field alleviation layer serves to discharge these charges. For example, the electric field alleviation layer 330 may have an electrical characteristic where its resistance decreases non-linearly when an electric field of a predetermined level of higher is applied. Accordingly, when space charges accumulate and an electric field of a predetermined level of higher is applied, the resistance of the electric field alleviation layer 330 decreases non-linearly, allowing charges to be discharged from the first electrode 310 to the second electrode 320 or the outer semiconductive layer 16. Accordingly, the electric field alleviation layer 330 may be manufactured from a material known as field grading material (FGM). As a result, the electric field alleviation layer 330 serves as a discharge passage for discharging charges.

Further, as illustrated in FIG. 3, the second electrode 320 and the outer semiconductive layer 16 of the power cable are not in direct contact. However, by finishing with a semiconductive taping layer (St) configured by cross-winding a separate semiconductive tape before mounting the housing H, the second electrode 320 and the outer semiconductive layer 16 of the power cable may be electrically connected.

Further, the housing H may also be finished to be mounted and grounded so that the housing H is connected to the metal shielding layer 18 of the power cable.

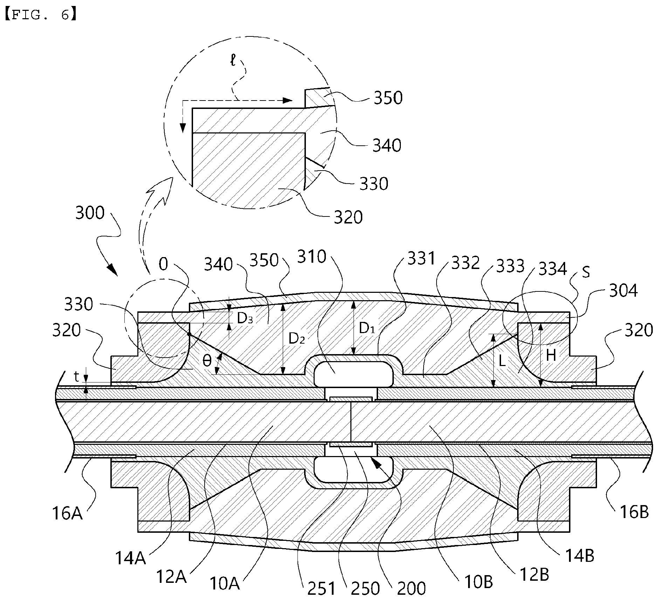

The direct-current power cable system according to the present invention may prevent or minimize electric field distortion and the reduction of direct-current dielectric strength due to space charge accumulation in the sleeve member 300 by adjusting the shape of the electric field alleviation layer 330 and controlling the component content of the insulating composition that regulates the electrical conductivity of the electric field alleviation layer 330. Hereinafter, a detailed description will be provided with reference to FIG. 6.

FIG. 6 illustrates an enlarged cross-sectional view of the sleeve member 300 in the direct-current power cable system according to the present invention.

As illustrated in FIG. 6, the rubber insulating layer 340, which surrounds the pair of second electrodes 320 and the electric field alleviation layer 330, has a stepped level difference S formed at both ends, respectively, and the stepped level difference S may be provided to be exposed to the outside at both ends of the sleeve shielding layer 350.

That is, the distance between both ends of the sleeve shielding layer 350 may be formed shorter than the distance between both ends of the rubber insulating layer 340.

In addition, the side surfaces of the ends of the pair of second electrodes 320 and the rubber insulating layer 340 may form a vertical, coplanar surface as illustrated in FIG. 6.

With such a structure, the distance between both ends of the rubber insulating layer 340, based on the cross-section of the rubber insulating layer 340, is configured to be longer than the distance between both ends of the sleeve shielding layer 350, thereby allowing the path of the creepage distance from the sleeve shielding layer to the second electrode to be formed in a stepped shape.

As described above, the sleeve shielding layer 350 is spaced apart from the second electrode 320 to ensure a creepage distance $\ell$ along the stepped path, which is a surface distance from each end of the sleeve shielding layer 350 to each second electrode 320, allowing for smooth diagnostic operations of the direct-current power cable system.

Meanwhile, the electric field alleviation layer 330 has relatively low resistance and dielectric strength properties, so caution should be taken to avoid excessive use. Accordingly, in the direct-current power cable system according to the present invention, by configuring the thickness or outer diameter of each section of the electric field alleviation layer 330 differently in the length direction, it is possible to prevent dielectric strength reduction caused by an excessive proportion of the electric field alleviation layer 330, while also minimizing costs associated with reducing the amount of electric field alleviation layer 330 used.

With reference to FIG. 6, the electric field alleviation layer 330 is provided to surround the entire region of the first electrode 310, which is disposed at the center portion, and to be in contact with the inner surface of the second electrode 320. The electric field alleviation layer 330 is provided with an outer diameter variation section, where an outer diameter of the electric field alleviation layer 330 changes in the direction from the first electrode 310 toward the pair of second electrodes 320 disposed on both ends. Accordingly, compared to configuring an outer circumferential surface of the electric field alleviation layer 330 as flat, it is expected to reduce consumption of a material that configures the electric field alleviation layer 330 while still providing sufficient electric field alleviation effects due to charge movement.

Here, a slope θ of an inclined section of the electric field alleviation layer 330 in the sleeve member 300 may be formed within a range of 5 to 45 degrees, preferably within 15 to 25 degrees.

Specifically, the electric field alleviation layer 330 may be configured to include: a first electrode covering portion 331 that surrounds the first electrode 310; a pair of connection portions 332 with a reduced outer diameter compared to the first electrode covering portion 331, extending from both sides of the first electrode covering portion 331 in the direction of the second electrodes; a pair of inclined portions 333 connected to the connection portions 332, with an increasing outer diameter in the direction of the second electrodes to have an inclined section; and a pair of second electrode covering portions 334 connected to the inclined portions 333, in contact with the inner surface region of the second electrode 320, and at least partially disposed between the outer semiconductive layer and the second electrode, being in contact with the outer semiconductive layer.

It is desirable to optimize the shape and size of the electric field alleviation layer in order to sufficiently ensure the electric field concentration alleviation effect while minimizing the use of expensive fillers.

Therefore, configuring the first electrode covering portion 331, the connection portions 332, the inclined portions 333, and the second electrode covering portions 334 in the aforementioned shapes may ultimately be determined based on the thickness conditions for each region of the rubber insulating layer or the resultant shape thereof. Specifically, the rubber insulating layer 340 may be provided on the interface of the electric field alleviation layer 330 while satisfying the following Equation 1.

[Equation 1]

$$D2\,(mm)\ \geq\ D1\,(mm)\ \geq\ D3\,(mm)$$

Here,

D1: Thickness (mm) of the rubber insulating layer 340 at top of the first electrode covering portion 331, based on the cross-section of the sleeve member 300

D2: Thickness (mm) of the rubber insulating layer 340 at top of the connection portion 332, based on the cross-section of the sleeve member 300

D3: Thickness (mm) of the rubber insulating layer 340 at an upper surface of the second electrode 320, based on the cross-section of the sleeve member 300

In addition, an interface length of the inclined section of the inclined portion 333 may be configured to be longer than an interface length of the connection portion 332 of the electric field alleviation layer 330 (allowing the slope θ of the inclined section to be gently configured). In such a configuration, the electric field alleviation layer 330 may more stably withstand the high pressure applied to the electric field alleviation layer 330 during the manufacturing process of forming the rubber insulating layer 340 on the interface of the electric field alleviation layer 330.

As described above, it has been confirmed that the thickness D2 of the rubber insulating layer 340 at the top of the connection portion 332, among the thicknesses of respective regions of the rubber insulating layer, may be made the largest, allowing the connection portion of the electric field alleviation layer 330, which does not directly surround the electrode, to be configured as the smallest.

In addition, when the sleeve shielding layer 350 and the second electrode 320 are separated from each other as described above, the end of the rubber insulating layer is exposed to ensure the path of the creepage distance to be formed in a stepped shape, the thickness of the rubber insulating layer may be minimized. Therefore, the thickness D3 of the rubber insulating layer 340 at the upper surface of the second electrode 320 may be minimized, and the thickness D1 of the rubber insulating layer 340 at the top of the first electrode covering portion 331 is smaller than the thickness D2 of the rubber insulating layer 340 at the top of the connection portion 332, but larger than the thickness D3 of the rubber insulating layer 340 at the upper surface of the second electrode 320, indicating that the shape and size of the electric field alleviation layer may be optimized.

In summary, by setting the thickness for each region of the rubber insulating layer 340 to satisfy [Equation 1] above, the thickness of the electric field alleviation layer surrounded by the rubber insulating layer may sufficiently surround or be in contact with each electrode, thereby maximizing the electric field alleviation effect while minimizing the volume and costs of the electric field alleviation layer.

Further, the electric field alleviation layer 330 of the sleeve member 300 is provided to entirely surround the first electrode 310 and to be in contact with the inner surface of the second electrode 320. Additionally, the electric field alleviation layer 330 may be provided to extend in the direction from a lower portion of the second electrode 320 toward the outer semiconductive layer 16 of the power cable, so that the outer semiconductive layers 16 of the pair of direct-current power cables 100A and 100B and the pair of second electrodes 320 are not in contact with each other by means of the electric field alleviation layer 330. Here, the thickness (t) of the electric field alleviation layer extending in the direction from the lower portion of the second electrode 320 toward the outer semiconductive layer 16 of the power cable, which is a spacing distance between the second electrode 320 and each outer semiconductive layer 16, may preferably be formed in the range of 2 millimeters (mm) to 10 millimeters (mm).

When the outer semiconductive layer 16 of the power cable comes into contact with the second electrode 320, a region is generated where the second electrode 320, the outer semiconductive layer 16, and the electric field alleviation layer 330 all come into contact at a single point, leading to excessive accumulation of space charges in this region, which results in an electrically weak point.

Therefore, in the direct-current power cable system according to the present invention, as described above, the electric field alleviation layer 330 extends into the space between the second electrode 320 and the outer semiconductive layer 16, and the electric field alleviation layer 330 is brought into contact with the outer semiconductive layer 16 of the power cable. This removes the possibility of the formation of a triple point where the second electrode 320, the outer semiconductive layer 16, and the electric field alleviation layer 330 all come into contact near the cable connection region, thereby reducing the risk of insulation breakdown.

In addition, as a contact area between the electric field alleviation layer 330 and the second electrode 320 increases, and the electric field alleviation layer 330 is in direct contact with the outer semiconductive layer 16, the contact area further increases. This configuration may expand the microcurrent path to the outer semiconductive layer 16, allowing space charges to discharge easily into the outer semiconductive layer without accumulating.

Furthermore, the electric field alleviation layer 330 may be composed of an insulating composition with higher electrical conductivity than the rubber insulating layer 340. It has been experimentally confirmed that, due to this electrical conductivity, the temperature of the electric field alleviation layer 330 may be controlled within a range of 20 to 90 degrees Celsius (°C) when an electric field of 10 to 30 kV/mm is applied to the electric field alleviation layer 330.

Here, the electrical conductivity of the rubber insulating layer 340 is $10^{-12}$ to $10^{-15}$ S/m (siemens per meter), and it is preferable that the electrical conductivity of the electric field alleviation layer 330 is greater than that of the rubber insulating layer 340. Preferably, the electrical conductivity of the electric field alleviation layer 330 may be adjusted to be in the range of 5 to 10,000 times that of the rubber insulating layer 140. For example, under the condition that temperature and electric field remain constant, when the electrical conductivity of the rubber insulating layer 340 is $10^{-14}$ S/m, the electrical conductivity of the electric field alleviation layer 330 may be adjusted to $5\times10^{-14}$ to $10^{-10}$ S/m by the insulating composition.

The electric field alleviation layer 330 may be configured from an insulating composition that includes thermosetting rubber and a filler that induces nonlinear electrical behavior. The thermosetting rubber may be configured as liquid silicone rubber (LSR), ethylene propylene rubber (EPDM), or a mixture thereof, and lubricants, crosslinking agents, co-crosslinking agents, and antioxidants, etc. may in added as components of the mixture.

Further, fillers that induce nonlinear electrical behavior, such as silicon carbide, may be used. In addition, conductive or semiconductive fillers may be further used to enhance properties.

Here, through adjusting the content of components of the filler, the electrical properties of the electric field alleviation layer 330, that is, the insulating function, may be achieved, while satisfying the characteristic that when microcurrents cause a specific electric field value or more, the electrical conductivity significantly increases, allowing the space charge to move along the electric field relaxation layer.

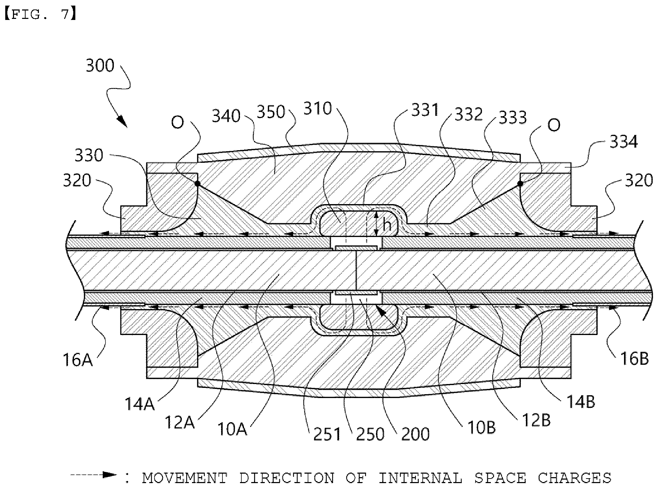

FIG. 7 illustrates the movement direction of internal space charges due to microcurrents in the direct-current power cable system according to the present invention.

As illustrated in FIG. 7, when an excessive voltage is applied to the interior of the sleeve member 300 having the aforementioned configuration, microcurrents flow into the electric field alleviation layer 330, and the microcurrents flow along the electric field alleviation layer 330, which has a thin thickness in the spaced region between the second electrode 320 and the outer conductive layer 16. Further, since the end of the electric field alleviation layer 330 is connected to the outer semiconductive layer 16, the charges inside the sleeve member 300 move to the outer semiconductive layer 16 through the electric field alleviation layer 330, which has a thin thickness, due to the microcurrents. Therefore, it is possible to prevent electric field distortion due to local electric field concentration and insulation breakdown in the cable joint box in the region where the outer semiconductive layer 16, the second electrode 320, and the electric field alleviation layer 330 all come into contact at a single point.

As described above, in the direct-current power cable system according to the present invention, the electric field alleviation layer 330 is provided to be in contact with the entire region of the first electrode 310 and the inner surface of the second electrode 320. Accordingly, a triple point may be formed on the inner surface of each of the pair of second electrodes 320 where the second electrode 320, the electric field alleviation layer 330, and the rubber insulating layer 340 all come into contact. However, by optimizing the height of the electric field alleviation layer, it is possible to achieve electric field alleviation, structural simplification, and cost reduction.

Since the filler added to the thermosetting rubber to satisfy the electrical or physical properties of the electric field alleviation layer 330 is relatively expensive, it is desirable to minimize the use of the electric field alleviation layer 330 while sufficiently achieving the electric field concentration alleviation effect of the electric field alleviation layer 330.

Therefore, in the present invention, the electric field alleviation layer 330 surrounds the first electrode 310 and is provided to be in contact with the inner surface of the second electrode 320 rather than the entire region of the pair of second electrodes 320, thereby reducing manufacturing costs.

Further, regarding a position of a triple point O where the second electrode 320, the electric field alleviation layer 330, and the rubber insulating layer 340 all come into contact, as illustrated in FIGS. 6 and 7, the sleeve member 300 of the present invention has a triple point formed where the second electrode 320, the electric field alleviation layer 330, and the rubber insulating layer 340 meet, but a structure is applied to keep the triple point as far as possible from the cable conductor. With this structure, electric field concentration is alleviated, reducing the risk of insulation breakdown, while minimizing the volume of the electric field alleviation layer and simplifying the shape of components such as the second electrode covering portion.

Although there is an advantage in that reducing the radial distance of the triple point decreases the usage of the electric field alleviation layer 330, thereby reducing manufacturing costs. However, as the outer diameter of the electric field alleviation layer 330 decreases, a high voltage may be excessively applied to the rubber insulating layer 340, which has a relatively high volume resistivity, near the power cable insulating layer 14. This causes electric field concentration in the rubber insulating layer 340, which may lead to insulation breakdown problems such as explosion or damage.

To solve this problem, the voltage needs to be appropriately and evenly distributed between the electric field alleviation layer 330 and the rubber insulating layer 340, with the triple point, where the inner surface of the second electrode 320, the electric field alleviation layer 330, and the rubber insulating layer 340 all come into contact, serving as a boundary. This is because, when microcurrents flow through the electric field alleviation layer 330, the volume resistivity of the electric field alleviation layer 330 decreases, allowing the internally accumulated charges to move along the outer semiconductive layer 16 of the power cable, thereby alleviating electric field concentration, but the rubber insulating layer 340 cannot achieve this effect.

Specifically, it is desirable to design the relationship between a shortest distance L from the insulating layer 14 of the power cable to the triple point O where the second electrode 320, the electric field alleviation layer 330, and the rubber insulating layer 340 meet, and a shortest distance H from the insulating layer 14 to the top of the second electrode, to satisfy Equation 2 below.

[Equation 2]

$$1/2 \times H \le L \le H$$

That is, when the triple point O is disposed at a position of 50 % or less of the height of the second electrode 320, the slope of the inclined portion 333 of the electric field alleviation layer may be reduced, and the volume of the electric field alleviation layer may be minimized. However, as the triple point O moves closer to the conductor of the cable, the risk of electric field concentration or insulation breakdown increases. Therefore, it has been confirmed that the triple point O needs to be 50 % or more of the height of the second electrode 320 in order to somewhat alleviate electric field concentration at the triple point.

Therefore, it is desirable to configure the height of the triple point, which defines the height of the region where the electric field alleviation layer 340 is in contact with the inner surface of the second electrode 320, to satisfy Equation 2 according to the height of the second electrode 320.

FIGS. 8 and 9 are graphs illustrating the electric field distribution in the direct-current power cable system according to an embodiment of the present invention.

In the graphs illustrated in FIGS. 8 and 9, the closer the color is to blue, the more alleviated the electric field distribution is, and the closer the color is to red, the more concentrated the electric field is.

FIG. 8 illustrates the electric field distribution, in the direct-current power cable system, in a structure where the electric field alleviation layer 330 surrounds the first electrode 310 and the second electrode 320, but only contacts the inner surface region of the second electrode 320, excluding the outer surface and the outer circumferential surface (Embodiment 1).

With reference to FIG. 8, the direct-current power cable system according to Embodiment 1 is provided with a structure in which the electric field alleviation layer 330 does not entirely surround the second electrode 320 but contacts the entire inner surface region and the bottom region of the second electrode 320, excluding the outer surface and the upper surface. This configuration may reduce the usage of electric field alleviation layer 330. Further, inside the sleeve member 300, the electric field distribution is relatively evenly spread between the first electrode 310 and the second electrode 320. However, some electric field concentration is observed in the outer edge region of the rubber insulating layer 340, which surrounds the electric field alleviation layer 330 and the second electrode 320 while maintaining a thin thickness, and there is also a tendency for the electric field distribution to be relatively concentrated in the insulating layer 14 of the power cable, particularly in the insulating layer 14 disposed below the second high-voltage electrode 320.

FIG. 9 illustrates the electric field distribution, in the direct-current power cable system, in a structure where the electric field alleviation layer 330 surrounds the first electrode 310 and contacts the inner surface region and bottom region of the second electrode 320, excluding the outer surface and the upper surface, and further forms a triple point where the second electrode 320, the electric field alleviation layer 330, and the rubber insulating layer 340 all come into contact on the inner surface of the second electrode 320 (Embodiment 2).

That is, this is a structure in which the height of the triple point (O) satisfies Equation 2.

With reference to FIG. 9, the direct-current power cable system according to Embodiment 2 may reduce the usage of the electric field alleviation layer 330 compared to FIG. 8. Further, the electric field distribution inside the sleeve member 300 is relatively evenly spread between the first electrode 310 and the second electrode 320, and it has been confirmed that the electric field distribution is most effectively alleviated in the insulating layer 14 of the power cable disposed below the second electrode 320, thus, both the electric field alleviation effect and cost reduction can be achieved.

That is, in the present invention, the electric field alleviation layer can contact the inner surface of the second electrode without entirely surrounding the second electrode, and further control the height of the triple point where the second electrode 320, the electric field alleviation layer 330, and the rubber insulating layer 340 all come into contact, thereby maximizing the electric field alleviation effect while also achieving cost reduction.

While the present invention has been described above with reference to the exemplary embodiments, it may be understood by those skilled in the art that the present invention may be variously modified and changed without departing from the spirit and scope of the present invention disclosed in the claims. Therefore, it should be understood that any modified embodiment that essentially includes the constituent elements of the claims of the present invention is included in the technical scope of the present invention.

**Claims**

1. A direct-current power cable system, comprising:

   a pair of direct-current power cables, each including a conductor, an inner semiconductive layer surrounding the conductor, an insulating layer surrounding the inner semiconductive layer, and an outer semiconductive layer surrounding the insulating layer, wherein cable connection regions in which the conductor, the insulating layer, and the outer semiconductive layer are sequentially exposed are disposed to face each other;

a cable joint box connecting the pair of direct-current power cables, the cable joint box including: a conductor connection portion configured to connect the conductors of the pair of direct-current power cables; a sleeve member mounted to surround the conductor connection portion and the cable connection regions; and a housing accommodating the sleeve member, wherein the sleeve member comprises:

a first electrode disposed to surround the conductor connection portion and electrically connected to the conductor connection portion;

a pair of second electrodes each provided on both sides of the first electrode along a cable length direction;

an electric field alleviation layer surrounding the first electrode and the insulating layer, in contact with an inner surface of the second electrode, and at least partially disposed between the second electrode and the outer semiconductive layer to ensure the second electrode and the outer semiconductive layer to be in a non-contact state, being in contact with the outer semiconductive layer;

a rubber insulating layer surrounding the electric field alleviation layer and the second electrode; and

a sleeve shielding layer surrounding the rubber insulating layer, and

wherein a triple point is provided on the inner surface of the second electrode where the second electrode, the electric field alleviation layer, and the rubber insulating layer all meet, and a shortest distance L from the insulating layer to the triple point is greater than a height h of the first electrode.

2. The direct-current power cable system of claim 1, wherein a shortest distance H from the insulating layer to top of the second electrode and the shortest distance L from the insulating layer to the triple point satisfy a following equation.

$$[\text{Equation}] \quad 1/2 \times H \leq L \leq H$$

3. The direct-current power cable system of claim 1, wherein the sleeve shielding layer is provided to be separated from the second electrode, and

wherein a distance between both ends of the sleeve shielding layer is formed shorter than a distance between both ends of the rubber insulating layer, so that a path for a creepage distance from the sleeve shielding layer to the second electrode is formed in a stepped shape.

4. The direct-current power cable system of claim 1, wherein the electric field alleviation layer is configured from a material with higher electrical conductivity than the rubber insulating layer.

5. The direct-current power cable system of claim 1, wherein the conductor connection portion includes:

a conductor sleeve configured to connect the conductors of the pair of direct-current power cables; and

a corona shield mounted on an outer side of the conductor sleeve and electrically connected to the conductor sleeve.

6. The direct-current power cable system of claim 1, wherein the electric field alleviation layer is provided to surround an entire region of an outer circumferential surface of the first electrode disposed in the center portion, and is provided with an outer diameter variation section where an outer diameter of the electric field alleviation layer changes between the first electrode and the second electrode.

7. The direct-current power cable system of claim 6, wherein the electric field alleviation layer includes:

a first electrode covering portion surrounding the first electrode;

a pair of connection portions extending in a direction from both sides of the first electrode covering portion toward the second electrode, with a reduced outer diameter compared to the first electrode covering portion;

a pair of inclined portions connected to the connection portions, with an increasing outer diameter in a direction of the second electrode to have an inclined section; and

a pair of second electrode covering portions connected to the inclined portions, in contact with an inner surface region of the second electrode, and at least partially disposed between the outer semiconductive layer and the second electrode, being in contact with the outer semiconductive layer.

8. The direct-current power cable system of claim 7, wherein a slope of the inclined portion of the electric field alleviation layer is in the range of 5 degrees to 45 degrees.

9. The direct-current power cable system of claim 1, wherein electrical conductivity of the rubber insulating layer is $10^{-12}$ to $10^{-15}$ S/m (Siemens per meter), and electrical conductivity of the electric field alleviation layer is 5 to 10000 times greater than electrical conductivity of the rubber insulating layer.

10. The direct-current power cable system of claim 1, wherein the electric field alleviation layer is configured from an insulating composition including a thermosetting rubber and a filler that induces nonlinear electrical behavior.

11. The direct-current power cable system of claim 10, wherein the thermosetting rubber is liquid silicone rubber (LSR) or ethylene propylene rubber (EPDM).

12. The direct-current power cable system of claim 10, wherein the filler includes silicon carbide.

13. The direct-current power cable system of claim 1, wherein the housing has a waterproofing material filled therein.

14. The direct-current power cable system of claim 1, wherein the cable joint box is a normal joint that electrically connects both ends of the sleeve shielding layer to the pair of second electrodes on both sides using electrical connection means.

15. The direct-current power cable system of claim 1, wherein the cable joint box is an insulation joint that electrically connects one end of the sleeve shielding layer to only one of the second electrodes using electrical connection means, while the other end of the sleeve shielding layer and a remaining second electrode are in an insulated state.

16. The direct-current power cable system of claim 1, wherein the housing is made of a metal

【FIG. 1】

【FIG. 2】

【FIG. 3】

【FIG. 4】

【FIG. 5】

【FIG. 6】

【FIG. 7】

------> : MOVEMENT DIRECTION OF INTERNAL SPACE CHARGES

【FIG. 8】

【FIG. 9】

【FIG. 10】

## INTERNATIONAL SEARCH REPORT

| International application No. |
|---|
| **PCT/KR2023/008589** |

### A. CLASSIFICATION OF SUBJECT MATTER

**H02G 15/184**(2006.01)i; **H01R 4/20**(2006.01)i; **H01B 3/28**(2006.01)i; **C08L 83/04**(2006.01)i; **C08L 23/16**(2006.01)i; **C08K 3/04**(2006.01)i; **C08K 3/14**(2006.01)i; **C08K 3/22**(2006.01)i

According to International Patent Classification (IPC) or to both national classification and IPC

### B. FIELDS SEARCHED

Minimum documentation searched (classification system followed by classification symbols)

H02G 15/184(2006.01); H01B 1/02(2006.01); H01B 17/56(2006.01); H01R 31/06(2006.01); H02G 1/14(2006.01); H02G 15/068(2006.01); H02G 15/08(2006.01); H02G 15/105(2006.01); H02G 15/115(2006.01); H02G 15/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전력 케이블(power cable), 슬리브(sleeve), 접속함(junction box), 전극 (electrode), 전계 완화(electric field relaxing), 절연층(insulating layer), 3중점(triple point)

### C. DOCUMENTS CONSIDERED TO BE RELEVANT

| Category* | Citation of document, with indication, where appropriate, of the relevant passages | Relevant to claim No. |
|---|---|---|
| Y | KR 10-2020-0028931 A (SUMITOMO ELECTRIC INDUSTRIES, LTD.) 17 March 2020 (2020-03-17) See paragraphs [0003], [0005], [0041]-[0046] and [0066]-[0072]; claim 11; and figure 2. | 1-16 |
| Y | KR 10-2020-0069967 A (LS CABLE & SYSTEM LTD.) 17 June 2020 (2020-06-17) See paragraphs [0089] and [0098]; and figure 16. | 1-16 |
| Y | JP 2015-142476 A (SWCC SHOWA CABLE SYSTEMS CO., LTD. et al.) 03 August 2015 (2015-08-03) See paragraph [0021]; and figure 2. | 3,14-15 |
| Y | KR 10-1578628 B1 (ABB RESEARCH LTD.) 17 December 2015 (2015-12-17) See paragraph [0037]; and figure 1. | 6-8 |
| A | JP 2017-200371 A (3M INNOVATIVE PROPERTIES CO.) 02 November 2017 (2017-11-02) See figures 1-2. | 1-16 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 October 2023** | **11 October 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/008589**

| Patent document cited in search report | | | Publication date (day/month/year) | Patent family member(s) | | | Publication date (day/month/year) |
|---|---|---|---|---|---|---|---|
| KR | 10-2020-0028931 | A | 17 March 2020 | CN | 110915087 | A | 24 March 2020 |
| | | | | CN | 110915087 | B | 16 April 2021 |
| | | | | JP | 6737407 | B2 | 05 August 2020 |
| | | | | KR | 10-2480532 | B1 | 23 December 2022 |
| | | | | US | 10840690 | B2 | 17 November 2020 |
| | | | | US | 2020-0203942 | A1 | 25 June 2020 |
| | | | | WO | 2019-012885 | A1 | 17 January 2019 |
| KR | 10-2020-0069967 | A | 17 June 2020 | None | | | |
| JP | 2015-142476 | A | 03 August 2015 | CN | 104821538 | A | 05 August 2015 |
| | | | | CN | 104821538 | B | 03 July 2018 |
| | | | | JP | 2015-142477 | A | 03 August 2015 |
| | | | | JP | 5970005 | B2 | 17 August 2016 |
| | | | | JP | 6258715 | B2 | 10 January 2018 |
| KR | 10-1578628 | B1 | 17 December 2015 | CN | 103718404 | A | 09 April 2014 |
| | | | | CN | 103718404 | B | 10 April 2018 |
| | | | | EP | 2730002 | A2 | 14 May 2014 |
| | | | | EP | 2730002 | B1 | 28 July 2021 |
| | | | | JP | 2014-518500 | A | 28 July 2014 |
| | | | | JP | 5805865 | B2 | 10 November 2015 |
| | | | | KR | 10-2014-0030330 | A | 11 March 2014 |
| | | | | US | 2014-0116746 | A1 | 01 May 2014 |
| | | | | WO | 2013-004748 | A2 | 10 January 2013 |
| | | | | WO | 2013-004748 | A3 | 07 November 2013 |
| JP | 2017-200371 | A | 02 November 2017 | JP | 6823941 | B2 | 03 February 2021 |

Form PCT/ISA/210 (patent family annex) (July 2022)